# EUROPÄISCHE PATENTSCHRIFT

(11) **EP 3 471 928 B1**
(45) Veröffentlichungstag und Bekanntmachung des Hinweises auf die Patenterteilung: **22.03.2023**
(21) Anmeldenummer: 17732030.6
(22) Anmeldetag: 20.06.2017
(51) Int. Cl.: B25J 9/16

(54) **KONFIGURIEREN UND/ODER STEUERN EINER ROBOTERANORDNUNG**
CONFIGURING AND/OR CONTROLLING A ROBOT ARRANGEMENT
CONFIGURATION ET/OU COMMANDE D'UN ENSEMBLE DE ROBOTS

(30) Priorität: 21.06.2016 DE 102016007601
(43) Veröffentlichungstag der Anmeldung: 24.04.2019
(73) Patentinhaber: KUKA Deutschland GmbH, 86165 Augsburg (DE); Deutsches Zentrum für Luft- und Raumfahrt e.V., 51147 Köln (DE)
(72) Erfinder: ZIMMERMANN, Uwe, 86152 Augsburg (DE); DANZER, Marinus, 86150 Augsburg (DE); SCHEURER, Christian, 86150 Augsburg (DE); SHARMA, Shashank, 86153 Augsburg (DE); BODENMÜLLER, Tim, 80807 München (DE); STEMMER, Andreas, 86666 Burgheim (DE)
(74) Vertreter: Schlotter, Alexander Carolus Paul
(86) Internationale Anmeldenummer: PCT/EP2017/000716
(87) Internationale Veröffentlichungsnummer: WO 2017/220199

(56) Entgegenhaltungen:
- EP-A1- 2 979 825
- US-A1- 2011 106 308
- US-A1- 2013 013 110

## Beschreibung

Die vorliegende Erfindung betrifft Verfahren zum Konfigurieren und/oder Steuern einer Roboteranordnung mit wenigstens einem Roboter auf Basis einer Auswahl-Menge von vorgegebenen möglichen Ausgangs-Posen des Roboters sowie zum Vorgeben der Auswahl-Menge, ein System und Computerprogrammprodukt zur Durchführung eines solchen Verfahrens und eine Roboteranordnung mit wenigstens einem Roboter und dem System.

Roboter sollen häufig dieselbe Aufgabe an verschiedenen kartesischen Positionen durchführen, beispielsweise versetzte Bohrungen herstellen, Nieten setzen, Werkstücke aufnehmen bzw. ablegen und dergleichen.

Diese Aufgaben können die Roboter häufig in verschiedenen Konfigurationen durchführen, insbesondere mit verschiedenen anfänglichen Posen. So kann beispielsweise ein üblicher sechsachsiger Roboter um eine Bohr- oder Nietachse gedreht werden und diverse kartesische Positionen mit beispielsweise bis zu acht unterschiedlichen Achsstellungen realisieren oder ein sieben- oder mehrachsiger Roboter dieselbe kartesische Position mit teilweise unendlich vielen verschiedenen Achsstellungen realisieren.

Die US 2011/106308 A1 betrifft eine Vorrichtung und ein Verfahren zum Optimieren einer programmierten Bewegungsbahn für einen Industrieroboter, der ein Werkzeug hält, um Arbeiten entlang der Bahn während eines Arbeitszyklus auszuführen, wobei die Bewegungsbahn Informationen zu Positionen und Orientierungen des Werkzeugs an mehreren Zielpunkten auf der Bewegungsbahn enthält und das Verfahren für mindestens einen der Zielpunkte umfasst: Empfangen eines Toleranzintervalls für die Orientierung des Werkzeugs in dem Zielpunkt, Bestimmen von Bewegungen des Roboters zwischen dem Zielpunkt und einem oder mehreren der anderen Zielpunkte auf der Bahn für eine Vielzahl von verschiedenen Werkzeugorientierungen innerhalb des Toleranzintervalls, Auswählen einer der unterschiedlichen Werkzeugorientierungen als Werkzeugorientierung für den Zielpunkt basierend auf den ermittelten Bewegungen des Roboters und im Hinblick auf eine Minimierung der Zykluszeit, und Erzeugen eines Roboterprogramms basierend auf der ausgewählten Orientierung des Werkzeugs am Zielpunkt.

Aufgabe der vorliegenden Erfindung ist es zu, ein Konfigurieren und/oder Steuern einer Roboteranordnung mit wenigstens einem Roboter verbessern.

Diese Aufgabe wird durch ein Verfahren mit den Merkmalen des Anspruchs 1 gelöst. Ansprüche 9 bis 11 stellen ein System bzw. Computerprogrammprodukt zur Durchführung eines hier beschriebenen Verfahrens bzw. eine Roboteranordnung mit wenigstens einem Roboter und einem hier beschriebenen System unter Schutz. Die Unteransprüche betreffen vorteilhafte Weiterbildungen.

Nach einer Ausführung der vorliegenden Erfindung umfasst ein Verfahren zum Konfigurieren und/oder Steuern einer Roboteranordnung mit einem oder mehreren Robotern den Schritt: Ermitteln (jeweils) einer oder mehrerer möglicher Soll-Posen wenigstens eines Roboters der Roboteranordnung für eine oder mehrere vorgegebene Aufgaben des Roboters und eine oder mehrere vorgegebene Ausgangs-Positionen, insbesondere zum Ausführen dieser Aufgabe(n), auf Basis einer, insbesondere vor einem Betrieb des Roboters ermittelten, Auswahl-Menge von für diese Ausgangs-Position(en) und Aufgabe(n) vorgegebenen möglichen Ausgangs-Posen, insbesondere Ermitteln einer oder mehrerer möglicher Soll-Posen des Roboters für eine vorgegebene (erste) Aufgabe des Roboters und eine oder mehrere vorgegebene Ausgangs-Positionen zum Ausführen dieser (ersten) Aufgabe auf Basis der Auswahl-Menge von mehrerer möglichen Ausgangs-Posen, die jeweils für diese (erste) Aufgabe und diese bzw. einer dieser Ausgangs-Position(en) vorgegeben sind.

Nach einer Ausführung der vorliegenden Erfindung ist das System, insbesondere hard- und/oder software-, insbesondere programmtechnisch, zur Durchführung eines hier beschriebenen Verfahrens eingerichtet und/oder weist auf: Mittel zum Ermitteln (jeweils) einer oder mehrerer möglicher Soll-Posen wenigstens eines Roboters für eine oder mehrere vorgegebene Aufgaben des Roboters und eine oder mehrere vorgegebene Ausgangs-Positionen, insbesondere zum Ausführen dieser Aufgabe(n), auf Basis einer, insbesondere vor einem Betrieb des Roboters ermittelten, Auswahl-Menge von für diese Ausgangs-Position(en) und Aufgabe(n) vorgegebenen möglichen Ausgangs-Posen, insbesondere Mittel zum Ermitteln einer oder mehrerer möglicher Soll-Posen des Roboters für eine vorgegebene (erste) Aufgabe des Roboters und eine oder mehrere vorgegebene Ausgangs-Positionen zum Ausführen dieser (ersten) Aufgabe auf Basis der Auswahl-Menge von mehrerer möglichen Ausgangs-Posen, die jeweils für diese (erste) Aufgabe und diese bzw. einer dieser Ausgangs-Position(en) vorgegeben sind.

Somit wird in einer Ausführung eine Auswahl-Menge von möglichen Positionen verwendet, die jeweils für eine bestimmte Aufgabe des Roboters und eine bestimmte Position des Roboters zum Durchführen dieser Aufgabe vorgegeben sind bzw. werden, wobei in einer Weiterbildung für dieselbe Aufgabe und verschiedene Positionen des Roboters zum Durchführen dieser selben Aufgabe jeweils eine oder mehrere mögliche Positionen (in) der Auswahl-Menge vorgegeben sind bzw. werden und in einer weiteren Weiterbildung für verschiedene Aufgaben und jeweils verschiedene Positionen des Roboters zum Durchführen einer dieser Aufgaben jeweils eine oder mehrere mögliche Positionen (in) der Auswahl-Menge vorgegeben sind bzw. werden.

Nach einer Ausführung der vorliegenden Erfindung umfasst das Verfahren den Schritt: Ermitteln einer Soll-Bahn des Roboters zu dieser Soll-Pose oder diesen Soll-Posen. Zusätzlich oder alternativ umfasst das Verfahren nach einer Ausführung der vorliegenden Erfindung den Schritt: Konfigurieren der Roboteranordnung, insbesondere des Roboters und/oder seiner Umgebung, auf Basis dieser Soll-Pose oder diesen Soll-Posen.

Entsprechend weist nach einer Ausführung der vorliegenden Erfindung das System auf: Mittel zum Ermitteln einer Soll-Bahn des Roboters zu dieser Soll-Pose oder diesen Soll-Posen und/oder zum Konfigurieren der Roboteranordnung, insbesondere des Roboters und/oder seiner Umgebung, auf Basis dieser Soll-Pose oder diesen Soll-Posen.

Hierdurch kann in einer Ausführung das Konfigurieren und/oder Steuern der Roboteranordnung, insbesondere des Roboters, verbessert werden.

Nach der vorliegenden Erfindung umfasst ein Vorgeben der Auswahl-Menge von für eine oder mehrere (vorgegebene) Ausgangs-Positionen und eine oder mehrere (vorgegebene) Aufgaben des Roboters vorgegebenen möglichen Ausgangs-Posen, insbesondere von mehreren für eine (erste) Aufgabe und eine oder mehrere Ausgangs-Positionen zur Durchführung dieser (ersten) Aufgabe vorgegebenen möglichen Ausgangs-Posen, die Schritte:
- für eine oder mehrere vorgegebene Ausgangs-Positionen des Roboters (jeweils) Ermitteln einer Start-Menge von Ausgangs-Posen des Roboters;
- (jeweils) Auswählen von einer oder mehreren Ausgangs-Posen aus der Start-Menge auf Basis der einen oder mehreren vorgegebenen Aufgabe(n) des Roboters und eines, insbesondere benutzereingabenabhängig, vorgegebenen Auswahlkriteriums, insbesondere Auswählen von einer oder mehreren Ausgangs-Posen aus der Start-Menge auf Basis einer bzw. der (ersten) vorgegebenen Aufgabe des Roboters und eines, insbesondere benutzereingabenabhängig, vorgegebenen Auswahlkriteriums; und
- Hinzufügen dieser Ausgangs-Pose(n) als für diese Ausgangs-Position(en) und Aufgabe(n) vorgegebene Ausgangs-Pose(n) zu der Auswahl-Menge.

Entsprechend weist nach einer Ausführung der vorliegenden Erfindung ein, insbesondere das, System auf:
Mittel zum Ermitteln einer Start-Menge von Ausgangs-Posen des Roboters für (jeweils) eine oder mehrere vorgegebene Ausgangs-Positionen des Roboters;
Mittel zum (jeweils) Auswählen von einer oder mehreren Ausgangs-Posen aus der Start-Menge auf Basis der einen oder mehreren vorgegebenen Aufgabe(n) des Roboters und eines, insbesondere benutzereingabenabhängig, vorgegebenen Auswahlkriteriums, insbesondere Mittel zum Auswählen von einer oder mehreren Ausgangs-Posen aus der Start-Menge auf Basis einer bzw. der (ersten) vorgegebenen Aufgabe des Roboters und eines, insbesondere benutzereingabenabhängig, vorgegebenen Auswahlkriteriums; und Mittel zum Hinzufügen dieser Ausgangs-Pose(n) als für diese Ausgangs-Position(en) und Aufgabe(n) vorgegebene Ausgangs-Pose(n) zu der Auswahl-Menge.

Hierdurch kann in einer Ausführung eine Auswahl-Menge vorgegebener Ausgangs-Posen des Roboters vorgegeben werden, die insbesondere zum Konfigurieren und/oder Steuern der Roboteranordnung, insbesondere des Roboters, verwendet werden und so dieses Konfigurieren bzw. Steuern verbessern kann.

Der Roboter weist in einer Ausführung wenigstens vier, insbesondere wenigstens sechs, insbesondere wenigstens sieben, (Bewegungs)Achsen bzw. Gelenke, insbesondere Drehgelenke, auf, die in einer Weiterbildung durch A(chsa)ntriebe, insbesondere durch Elektromotoren, aktuierbar sind bzw. aktuiert werden bzw. sind.

Insbesondere wenigstens sechsachsige, insbesondere sieben- oder mehrachsige, Roboter gestatten häufig die Durchführung einer Aufgabe mit bzw. aus unterschiedlichen Ausgangs-Posen, so dass durch die Vorgabe einer Auswahl-Menge möglicher, insbesondere vorteilhafter, Ausgangs-Posen und/oder die Ermittlung einer oder mehrerer Soll-Posen aus dieser Auswahl-Menge das Konfigurieren und/oder Steuern von Roboteranordnungen mit solchen Robotern, insbesondere solcher Roboter, verbessert werden kann.

In einer Ausführung ist der Roboter ein stationärer Roboter. Dann kann dessen Konfigurieren insbesondere ein stationäres Platzieren des Roboters in (s)einer Umgebung umfassen. Zusätzlich oder alternativ kann das Konfigurieren der Roboteranordnung auch ein stationäres oder dynamisches (Um)Platzieren, insbesondere Bewegen, der Umgebung, insbesondere eines von dem Roboter zu bearbeitenden Werkstücks, umfassen. In einer Ausführung ist der Roboter ein mobiler Roboter, insbesondere ein schienengebundener oder frei beweglicher Roboter, insbesondere mit einem entsprechenden Fahrwerk oder dergleichen. Dann kann dessen Konfigurieren insbesondere ein dynamisches (Um)Platzieren bzw. Fortbewegen des Roboters, insbesondere seiner Basis, relativ zu (s)einer Umgebung, umfassen.

Eine Pose des Roboters hängt in einer Ausführung in fachüblicher Weise, insbesondere eineindeutig bzw. bijektiv, von den Stellungen aller Achsen des Roboters ab bzw. definiert diese, insbesondere eineindeutig bzw. bijektiv.

In einer Ausführung kann eine Pose somit insbesondere eine oder mehrere, insbesondere alle, Achsstellungen des Roboters aufweisen bzw. direkt (angeben). Zusätzlich oder alternativ kann eine Pose in einer Ausführung einen Wert eines ein- oder mehrdimensionalen Redundanzparameters aufweisen, beispielsweise einen an sich bekannten "Status"- und "Turn"-Wert eines sechsachsigen KUKA-Knickarmindustrieroboters, einen Ellbogenwinkel eines KUKA LBR iiwa-Roboters oder dergleichen. Der Redundanzparameters kann dazu dienen, die insbesondere bei Knickarmrobotern auftretende Mehrdeutigkeit der Achsstellungen zum Erreichen einer Pose bzw. Position zu beseitigen, zum Beispiel indem durch die Redundanzparameter "Status" und "Turn" die möglichen Achsstellungen bezeichnet werden und durch eine Auswahl der entsprechenden, insbesondere binären, Redundanzparameter die gewünschte Möglichkeit festgelegt wird.

Mehrere Posen können in einer Ausführung entsprechend insbesondere entsprechende (ein- oder mehrdimensionale) Wertebereiche eines bzw. des ein- oder mehrdimensionalen Redundanzparameters aufweisen. Hierdurch können diese Posen vorteilhaft gehandhabt, insbesondere abgespeichert und/oder visualisiert, werden.

Eine *Position* des Roboters hängt in einer Ausführung in fachüblicher Weise, insbesondere eineindeutig bzw. bijektiv, von einer, insbesondere ein-, zwei- oder dreidimensionalen, Lage und/oder Orientierung eines roboterfesten Referenzpunktes, insbesondere des T(ool)C(enter)P(oint)s, des Roboters ab bzw. definiert diese, insbesondere eineindeutig bzw. bijektiv.

Eine *Aufgabe* des Roboters hängt in einer Ausführung in fachüblicher Weise, insbesondere eineindeutig bzw. bijektiv, von einer Bewegung des Roboters, insbesondere einer Translation und/oder Rotation eines, insbesondere des, roboterfesten Referenzpunktes ab bzw. definiert diese, insbesondere deren Verlauf und/oder eineindeutig bzw. bijektiv. In einer Weiterbildung umfasst eine Aufgabe des Roboters insbesondere eine vorgegebene Bewegungsbahn, insbesondere einen ein- oder mehrdimensionalen Vorschub oder dergleichen.

Das Ermitteln wenigstens einer möglichen Soll-Pose des Roboters auf Basis der Auswahl-Menge umfasst in einer Ausführung insbesondere ein Auswählen aus der Auswahl-Menge, insbesondere ein Auswählen einer der vorgegebenen Ausgangs-Posen auf Basis eines, insbesondere benutzereingabenabhängig, vorgegebenen Gütekriteriums. Gleichermaßen kann in einer Ausführung für eine oder mehrere Ausgangs-Positionen und/oder Aufgaben des Roboters die Auswahl-Menge jeweils genau eine Ausgangs-Pose aufweisen, die dann für die entsprechende Ausgangs-Position und Aufgabe ausgewählt wird. Hierdurch kann das Ermitteln der Soll-Pose beschleunigt werden.

Die Soll-Bahn des Roboters weist in einer Ausführung die eine oder mehrere Soll-Pose(n) auf. Insbesondere können so in einer Ausführung dieselbe Aufgabe mehrmals nacheinander an verschiedenen Positionen abgearbeitet bzw. eine Bahnplanung hierfür verbessert werden.

Das Konfigurieren der Roboteranordnung umfasst in einer Ausführung das Platzieren des Roboters relativ zu (s)einer Umgebung und/oder eines Werkstücks relativ zu dem Roboter in (einer) der ermittelten möglichen Soll-Posen. Hierdurch kann der Roboter und/oder dessen Arbeitsumgebung verbessert werden.

In einer Ausführung ordnet die Ausgangs-Menge einer oder mehreren diskreten Ausgangs-Positionen jeweils eine oder mehrere mögliche Ausgangs-Posen zu. In einer Weiterbildung ist/sind dann für all diejenigen Ausgangs-Positionen, deren Abstand zu einer (ersten) dieser diskreten Ausgangs-Positionen der Ausgangs-Menge höchstens einem vorgegebenen Maximalabstand entspricht und/oder kleiner ist als zu allen anderen dieser diskreten Ausgangs-Positionen, ebenfalls diejenige(n) mögliche(n) Ausgangs-Pose(n) vorgegeben, die für diese eine (erste) diskrete Ausgangs-Position vorgegeben ist/sind. In einer Weiterbildung können für Ausgangs-Positionen, die keiner der diskreten Ausgangs-Positionen der Auswahl-Menge entsprechen, all diejenigen möglichen Ausgangs-Posen vorgegeben sein, die wenigstens einer der um- bzw. nächstliegenden diskreten Ausgangs-Positionen zugeordnet sind oder sich, insbesondere durch Interpolation, Mittelung oder dergleichen, aus diesen ergeben.

In einer Ausführung weist die Auswahl-Menge für mehrere, insbesondere benutzereingabenabhängig, beispielsweise durch Eingabe eines möglichen Ausgangs-Bereichs bzw. -Gebiets, vorgegebene Ausgangs-Positionen und/oder mehrere, insbesondere benutzereingabenabhängig, vorgegebene Aufgaben jeweils eine oder mehrere mögliche Ausgangs-Posen des Roboters auf bzw. werden bzw. sind für mehrere, insbesondere benutzereingabenabhängig, vorgegebene Ausgangs-Positionen und/oder mehrere, insbesondere benutzereingabenabhängig, vorgegebene Aufgaben jeweils eine oder mehrere mögliche Ausgangs-Posen des Roboters (der Auswahl-Menge) vorgegeben.

Hierdurch können in einer Ausführung verschiedene Ausgangs-Positionen angefahren und/oder verschiedene Aufgaben durchgeführt und/oder zum bzw. beim Konfigurieren der Roboteranordnung verwendet bzw. berücksichtigt werden.

In einer Ausführung sind die Ausgangs-Positionen der Auswahl-und/oder Start-Menge diskret, insbesondere äquidistant, entlang einer Kurve oder auf einer zwei- oder mehrdimensionalen, insbesondere benutzereingabenabhängig vorgegebenen und/oder ebenen oder gekrümmten, (Hyper)Fläche angeordnet. Entsprechend wird in einer Ausführung ein Arbeitsraum des Roboters oder ein, insbesondere benutzereingabenabhängig vorgegebener, Teil hiervon, insbesondere eine Kurve oder (Hyper)Fläche darin, insbesondere benutzereingabenabhängig, vorgegeben bzw. in die diskreten Ausgangs-Positionen gerastert bzw. -sampelt. Hierdurch können diese Ausgangs-Positionen vorteilhaft gehandhabt, insbesondere abgespeichert und/oder visualisiert, werden. Die Auswahl- und/oder Start-Menge ordnet somit in einer Ausführung einer eindimensionalen Folge oder einem zwei- oder mehrdimensionalen Feld bzw. Tuppel von diskreten Ausgangs-Positionen jeweils eine oder mehrere mögliche Ausgangs-Posen zu.

In einer Ausführung wird die Auswahl-Menge vor einem Betrieb des Roboters (zum Durchführen der Aufgabe(n)) bzw. offline ermittelt. Hierdurch kann in einer Ausführung eine rechenzeitintensive Ermittlung vorteilhaft zeitunkritisch vorab erfolgen.

In einer Ausführung kann auch die Ermittlung der Soll-Pose(n) vor einem Betrieb des Roboters (zum Durchführen der Aufgabe(n)) bzw. offline erfolgen, insbesondere zur offline-Bahnplanung und/oder -Konfiguration der Roboteranordnung, insbesondere des Roboters, beispielsweise seinem stationären Platzieren.

In einer anderen Ausführung wird bzw. werden die mögliche Soll-Pose(n) während eines Betriebs des Roboters zum Durchführen der Aufgabe(n) bzw. online ermittelt. Insbesondere kann in einer Ausführung in einem (zeitkritischen) Online-Betrieb auf die offline ermittelte Auswahl-Menge zugegriffen und so eine online-Bahnplanung und/oder -Konfiguration der Roboteranordnung, insbesondere des Roboters, beispielsweise dessen dynamisches (Um)Platzieren bzw. Fortbewegen, verbessert werden.

In einer Ausführung wird bzw. ist die Auswahl-Menge entsprechend eines, insbesondere benutzereingabenabhängig, vorgegeben Gütekriteriums sortiert, insbesondere vor einem Betrieb des Roboters (zum Durchführen der Aufgabe(n)) bzw. offline. Hierdurch kann in einer Ausführung die Auswahl einer Soll-Pose aus der Auswahl-Menge bzw. ihren vorgegebenen Ausgangs-Posen, verbessert, insbesondere vorteilhaft bei einer Online-Bahnplanung oder -Konfiguration genutzt, werden.

Zusätzlich oder alternativ kann in einer Ausführung die Auswahl-Menge für eine oder mehrere vorgegebene Ausgangs-Positionen und eine oder mehrere vorgegebene Aufgaben jeweils einen Wert eines bzw. des Gütekriteriums aufweisen. Hierdurch kann in einer Ausführung die Auswahl einer Soll-Pose aus der Auswahl-Menge bzw. ihrer vorgegebenen Ausgangs-Posen, verbessert, insbesondere vorteilhaft bei einer Offline-Bahnplanung oder - Konfiguration genutzt, werden.

Zusätzlich oder alternativ kann in einer Ausführung die Auswahl-Menge für eine oder mehrere vorgegebene Ausgangs-Positionen und eine oder mehrere vorgegebene Aufgaben jeweils eine oder mehrere End-Posen aufweisen. Hierdurch kann das Konfigurieren und/oder Steuern weiter verbessert werden: häufig kann der Roboter auch ein Ende einer Aufgabe bzw. eine End-Position mit bzw. in unterschiedlichen End-Posen realisieren. Dann kann es, insbesondere zum Platzieren des Roboters und/oder bei der Bahnplanung, vorteilhaft sein, auch die verschiedenen möglichen End-Posen zu berücksichtigen.

In einer Ausführung hängt ein, insbesondere das, Auswahlkriterium, auf Basis dessen Ausgangs-Posen aus der Start-Menge ausgewählt werden, und/oder ein, insbesondere das, Gütekriterium, das die Auswahl-Menge aufweist und/oder auf Basis dessen die Auswahl-Menge sortiert ist bzw. wird, und das in einer Weiterbildung mit dem Auswahlkriterium teilweise oder vollständig übereinstimmen kann, (jeweils), insbesondere benutzereingabenabhängig, insbesondere wahlweise, von einem ein- oder mehrdimensionalen Abstand zu ein- oder mehrdimensionalen vorgegebenen Achsgrenzen, insbesondere mechanischen und/oder softwaretechnischen Achsanschlägen, ab. Hierdurch können in einer Ausführung insbesondere Posen verworfen werden, die zu nahe an den Achsgrenzen liegen, diese insbesondere verletzen (würden). Entsprechend weist die Auswahl-Menge in einer Ausführung nur vorgegebene Ausgangs-Posen auf bzw. werden in einer Ausführung der Auswahl-Menge nur Ausgangs-Posen hinzugefügt, bei denen bzw. für die der Roboter die Aufgabe mit ausreichendem Abstand zu seinen Achsgrenzen durchführen kann.

Zusätzlich oder alternativ hängt in einer Ausführung das Auswahlkriterium und/oder das Gütekriterium (jeweils), insbesondere benutzereingabenabhängig, insbesondere wahlweise, von einem ein- oder mehrdimensionalen Abstand zu, insbesondere vorab bekannten und/oder während des Betriebs des Roboters zur Durchführung der Aufgabe erfassten, Hindernissen ab. Hierdurch können in einer Ausführung insbesondere Posen verworfen werden, bei denen der Roboter mit einem bzw. dem Hindernis kollidieren würde. Entsprechend weist die Auswahl-Menge in einer Ausführung nur vorgegebene Ausgangs-Posen auf bzw. werden in einer Ausführung der Auswahl-Menge nur Ausgangs-Posen hinzugefügt, bei denen bzw. für die der Roboter die Aufgabe kollisionsfrei durchführen kann.

Zusätzlich oder alternativ hängt in einer Ausführung das Auswahlkriterium und/oder das Gütekriterium (jeweils), insbesondere benutzereingabenabhängig, insbesondere wahlweise, von einem ein- oder mehrdimensionalen Abstand zu, insbesondere benutzereingabenabhängig, vorgegebenen (maximal( zulässig)en) Geschwindigkeiten und/oder (maximal( zulässig)en) Zeitableitungen hiervon, insbesondere (maximal( zulässigen) Beschleunigungen, Rucken oder dergleichen, des Roboters ab. Hierdurch können in einer Ausführung insbesondere Posen verworfen werden, die Geschwindigkeits-, Beschleunigungs- Ruck- oder ähnliche Grenzen verletzen (würden). Entsprechend weist die Auswahl-Menge in einer Ausführung nur vorgegebene Ausgangs-Posen auf bzw. werden in einer Ausführung der Auswahl-Menge nur Ausgangs-Posen hinzugefügt, bei denen bzw. für die der Roboter die Aufgabe ohne Überschreitung vorgegebener Geschwindigkeits-, Beschleunigungs- Ruck- oder ähnlichen Grenzen durchführen kann.

Zusätzlich oder alternativ hängt in einer Ausführung das Auswahlkriterium und/oder das Gütekriterium (jeweils), insbesondere benutzereingabenabhängig, insbesondere wahlweise, von einem ein- oder mehrdimensionalen Abstand zu vorgegebenen, insbesondere singulären, Posen, des Roboters ab. Hierdurch können in einer Ausführung insbesondere Posen verworfen werden, die zu nahe an diesen vorgegebenen, insbesondere singulären, Posen liegen (würden). Entsprechend weist die Auswahl-Menge in einer Ausführung nur vorgegebene Ausgangs-Posen auf bzw. werden in einer Ausführung der Auswahl-Menge nur Ausgangs-Posen hinzugefügt, bei denen bzw. für die der Roboter die Aufgabe mit ausreichendem Abstand zu den vorgegebenen, insbesondere singulären, Posen durchführen kann.

Zusätzlich oder alternativ hängt in einer Ausführung das Auswahlkriterium und/oder das Gütekriterium (jeweils), insbesondere benutzereingabenabhängig, insbesondere wahlweise, von Kräften ab, die der Roboter aufbringen kann, insbesondere vorgegebenen (zulässigen) Maximal- und/oder (erforderlichen) Mindestkräften, insbesondere zur Durchführung der Aufgabe. Entsprechend weist die Auswahl-Menge in einer Ausführung nur vorgegebene Ausgangs-Posen auf bzw. werden in einer Ausführung der Auswahl-Menge nur Ausgangs-Posen hinzugefügt, bei denen bzw. für die der Roboter ausreichende und/oder keine unzulässig hohen Kräfte aufbringen kann.

In einer Ausführung wird/werden bzw. ist/sind die Ausgangs-Position(en), für die die Auswahl-Menge vorgegeben ist bzw. wird, roboterfest, insbesondere roboterbasisfest, (vorgegeben), insbesondere in einem roboterfesten, insbesondere roboterbasisfesten, Koordinatensystem vorgegeben, insbesondere direkt oder mittels einer entsprechenden Transformation. Hierdurch kann die Auswahl-Menge sozusagen mit dem Roboter mitbewegt werden, was insbesondere das stationäre Platzieren oder dynamische Fortbewegen des Roboters verbessern kann.

In einer Ausführung weist das Verfahren den Schritt auf: Ermitteln mehrerer bzw. der Ausgangs-Positionen (zum Ermitteln) der Start-Menge auf Basis einer, insbesondere benutzereingabenabhängig, vorgegebenen, insbesondere parametrierbaren, Diskretisierung. Hierdurch kann in einer Ausführung ein in Betracht kommendes Start-Gebiet für die jeweilige Aufgabe vorteilhaft gerastert bzw. -sampelt werden. Entsprechend weist in einer Ausführung das System auf: Mittel zum Ermitteln mehrerer bzw. der Ausgangs-Positionen (zum Ermitteln) der Start-Menge auf Basis einer, insbesondere benutzereingabenabhängig, vorgegebenen, insbesondere parametrierbaren, Diskretisierung.

Zusätzlich oder alternativ weist in einer Ausführung das Verfahren den Schritt auf: Ermitteln der Ausgangs-Posen der Start-Menge auf Basis eines, insbesondere benutzereingabenabhängig, vorgegebenen, insbesondere parametrierbaren, Redundanzparameterwertebereichs und/oder einer, insbesondere benutzereingabenabhängig, vorgegebenen, insbesondere parametrierbaren, Diskretisierung. Hierdurch kann die Start-Menge vorteilhaft gehandhabt, insbesondere gespeichert, visualisiert und/oder gerastert bzw. -sampelt, werden. Entsprechend weist in einer Ausführung das System auf: Mittel zum Ermitteln der Ausgangs-Posen der Start-Menge auf Basis eines, insbesondere benutzereingabenabhängig, vorgegebenen, insbesondere parametrierbaren, Redundanzparameterwertebereichs und/oder einer, insbesondere benutzereingabenabhängig, vorgegebenen, insbesondere parametrierbaren, Diskretisierung.

Zusätzlich oder alternativ weist in einer Ausführung das Verfahren den Schritt auf: Ermitteln einer oder mehrerer Zwischen-Posen und/oder Ermitteln einer oder mehrerer End-Posen des Roboters auf Basis der jeweiligen Aufgabe, insbesondere Ermitteln einer oder mehrerer vorgegebener Zwischen- oder End-Positionen des Roboters auf Basis der Aufgabe, und/oder eines, insbesondere benutzereingabenabhängig, vorgegebenen, insbesondere parametrierbaren, Redundanzparameterwertebereichs und/oder einer, insbesondere benutzereingabenabhängig, vorgegebenen, insbesondere parametrierbaren, Diskretisierung. In einer Ausführung wird wenigstens eine Zwischen- und/oder wenigstens eine End-Pose auf Basis der Redundanzparameterwerte der Ausgangs-Pose ermittelt, insbesondere mit den(selben) bzw. für die(selben) Redundanzparameterwerte(n) der Ausgangs-Pose. Hierdurch kann in einer Ausführung eine Umkonfiguration des Roboters während des Durchführens der Aufgabe reduziert werden. Entsprechend weist in einer Ausführung das System auf: Mittel zum Ermitteln einer oder mehrerer Zwischen-Posen und/oder Ermitteln einer oder mehrerer End-Posen des Roboters auf Basis der jeweiligen Aufgabe, insbesondere zum Ermitteln einer oder mehrerer vorgegebener Zwischen- oder End-Positionen des Roboters auf Basis der Aufgabe, und/oder eines, insbesondere benutzereingabenabhängig, vorgegebenen, insbesondere parametrierbaren, Redundanzparameterwertebereichs und/oder einer, insbesondere benutzereingabenabhängig, vorgegebenen, insbesondere parametrierbaren, Diskretisierung.

Zusätzlich oder alternativ weist in einer Ausführung das Verfahren den Schritt auf: Simulieren, insbesondere numerisches Simulieren, der Durchführung der Aufgabe durch den Roboter, insbesondere Anfahren der Zwischen- und/oder End-Position(en) bzw. - Pose(n) aus der bzw. den Ausgangs-Position(en) bzw. Pose(n). Dabei kann insbesondere das Auswahlkriterium vorteilhaft ermittelt, beispielsweise eine Einhaltung von Achs-, Geschwindigkeits-, Kraft- und ähnlichen Grenzen, Kollisions- und/oder Singularitätsfreiheit und dergleichen geprüft werden. Entsprechend weist in einer Ausführung das System auf: Mittel zum Simulieren, insbesondere numerischen Simulieren, der Durchführung der Aufgabe durch den Roboter, insbesondere Anfahren der Zwischen- und/oder End-Position(en) bzw. -Pose(n) aus der bzw. den Ausgangs-Position(en) bzw. Pose(n).

Zusätzlich oder alternativ weist in einer Ausführung das Verfahren den Schritt auf: Ordnen, insbesondere Sortieren, der Ausgangs-Posen auf Basis des Auswahl-, insbesondere Gütekriteriums und/oder ihrer Abfolge und/oder einer, insbesondere benutzereingabenabhängig, vorgegebenen Anzahl. So können in einer Weiterbildung beispielsweise für eine Ausgangs-Position die erste(n) und/oder bezüglich des Gütekriteriums besten ermittelten möglichen Ausgangs-Posen, insbesondere eine vorgegebene Anzahl hiervon, ermittelt und der Auswahl-Menge hinzugefügt werden. Entsprechend weist in einer Ausführung das System auf: Mittel zum Ordnen, insbesondere Sortieren, der Ausgangs-Posen auf Basis des Auswahl-, insbesondere Gütekriteriums und/oder ihrer Abfolge und/oder einer, insbesondere benutzereingabenabhängig, vorgegebenen Anzahl.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Roboteranordnung, insbesondere den Roboter und/oder seine Umgebung, konfigurieren und/oder steuern kann.

In einer Ausführung werden ein oder mehrere, insbesondere alle, Schritte des Verfahrens vollständig oder teilweise automatisiert durchgeführt, insbesondere durch das System bzw. sein(e) Mittel.

Durch eine benutzereingabenabhängige Vorgabe kann insbesondere die Flexibilität des Verfahrens bzw. Systems erhöht bzw. dieses für verschiedene Anwendungen angepasst, insbesondere optimiert, werden. In einer Ausführung umfasst "benutzereingabenabhängig" insbesondere "wahlweise in Abhängigkeit von einer Benutzereingabe" und/oder "(in Abhängigkeit von einer Benutzereingabe) parametrierbar".

Ein Vorgeben und/oder Ermitteln umfasst in einer Ausführung ein Berechnen und/oder, insbesondere temporäres oder dauerhaftes bzw. nicht-flüchtiges, Abspeichern.

Weitere Vorteile und Merkmale ergeben sich aus den Unteransprüchen und den Ausführungsbeispielen. Hierzu zeigt, teilweise schematisiert,:
- Fig. 1:: eine Roboteranordnung mit einem Roboter und einem System zum Konfigurieren und/oder Steuern der Roboteranordnung nach einer Ausführung der vorliegenden Erfindung; und
- Fig. 2:: ein Verfahren zum Konfigurieren und/oder Steuern der Roboteranordnung nach einer Ausführung der vorliegenden Erfindung.

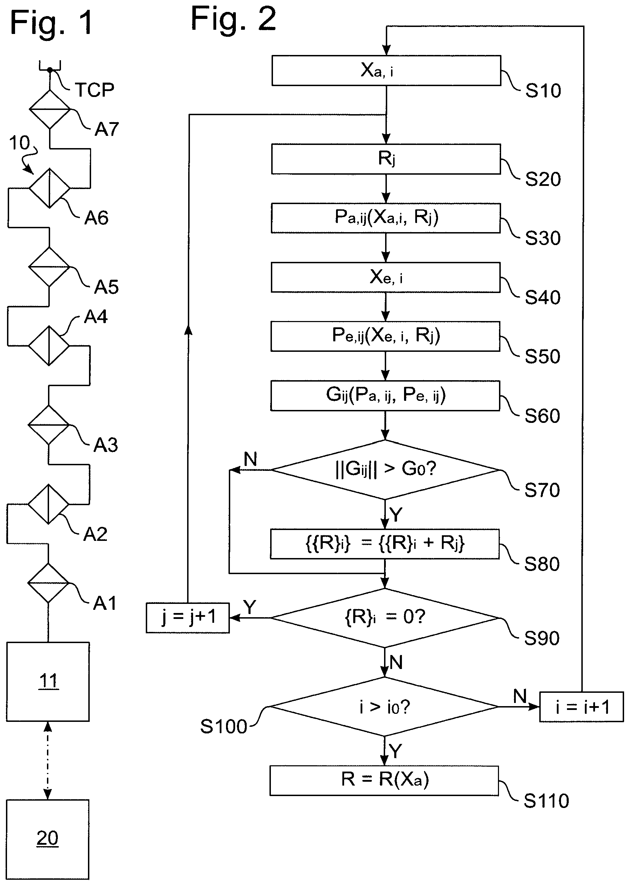

Fig. 1 zeigt exemplarisch eine Roboteranordnung mit einem Roboter 10 und einem System 20 zum Konfigurieren und/oder Steuern der Roboteranordnung, insbesondere zum Konfigurieren und/oder Steuern des Roboters 10 und/oder (s)einer (nicht dargestellten) Umgebung, nach einer Ausführung der vorliegenden Erfindung.

Der Roboter 10 weist in an sich bekannter Weise sieben Drehachsen A1 bis A7, einen Tool Center Point TCP und eine Basis 11 auf.

Das System 20 ist mit dem Roboter 10 signalverbunden und führt ein nachfolgend mit Bezug auf Fig. 2 beschriebenes Verfahren zum Konfigurieren und/oder Steuern der Roboteranordnung, insbesondere zum Konfigurieren und/oder Steuern des Roboters 10 und/oder (s)einer (nicht dargestellten) Umgebung, nach einer Ausführung der vorliegenden Erfindung durch bzw. ist hierzu eingerichtet. Es kann beispielsweise in einem bzw. durch einen Computer implementiert sein.

Zunächst wird vorab offline für eine vorgegebene Aufgabe, beispielsweise eine Linearbewegung des TCPs zum Einführen eines Niets entlang einer vorgegebenen Nietachse, einer Schraubbewegung des TCPs zum Bohren eines Lochs entlang einer vorgegebenen Bohrachse oder dergleichen, und eine Anzahl diskreter, auf einer ebenen oder gekrümmten Fläche verteilter kartesischer Ausgangs-Positionen zum Durchführen dieser Aufgabe, d.h. einer Anzahl möglicher Startpunkte dieser Linearbewegung bzw. Achse, die bezüglich der Basis 11 vorgegeben sind, eine Auswahl-Menge möglicher Ausgangs-Posen des Roboters 10 vorgegeben.

Hierzu wird in Schritt S10 zunächst eine erste Ausgangs-Positionen X_{a, 1} der diskreten Ausgangs-Positionen X_{a, i} eingelesen, wobei ein Benutzer durch entsprechende Eingabe beispielsweise die Grenzen und/oder Diskretisierung der Fläche vorgeben kann.

Dann wird in Schritt S20 zunächst ein erster Redundanzparameterwert R₁ vorgegeben, wobei ein Benutzer durch entsprechende Eingabe beispielsweise einen Redundanzparameterwertebereich und/oder dessen Diskretisierung bzw. Sampelung in Redundanzparameterwerte Rⱼ vorgeben kann. Dieser Redundanzparameter kann beispielsweise den aus der KUKA-KRL bekannten Status, Ellbogenwinkel, Drehung um die Stoßachse des TCPs oder dergleichen, aufweisen.

Für jeden Redundanzparameterwert Rⱼ aus Schritt S20 wird in Schritt S30 eine bijektiv zugeordnete bzw. durch diesen bestimmte Ausgangs-Pose P_{a, ij} des Roboters 10 ermittelt. Aus der Aufgabe, beispielsweise der Linearbewegung, wird zunächst in Schritt S40 eine End- Positionen X_{e, i} des Roboters 10 und hieraus in Schritt S50 mit dem Redundanzparameterwert Rⱼ aus Schritt S20 die zugehörige End-Pose P_{e, ij} des Roboters 10 ermittelt.

In einer nicht dargestellten Abwandlung könnten auch für verschiedene Redundanzparameterwert Rₖ, den Redundanzparameterwert Rⱼ der Ausgangs-Pose und die Ausgangs-Position X_{a, i} jeweils entsprechende End-Posen P_{e, ijk} ermittelt werden.

Dann wird in Schritt S60 die Durchführung der Aufgabe X_{a, i} → X_{e, i} bzw. die Bewegung P_{a, ij} → P_{e, ij(k)} simuliert und ein Auswahl-Kriterium Gᵢⱼ₍ₖ₎ ermittelt. Dieses kann beispielsweise von einem ausreichenden Abstand zu Achsgrenzen, Hindernissen, singulären Posen und/oder Geschwindigkeits- und/oder Beschleunigungsgrenzen des Roboters 10 bei seiner (Linear)Bewegung von der Ausgangs-Pose P_{a, ij} in die End-Pose P_{e, ij(k)} abhängen.

in Schritt S70 wird dieses Auswahl-Kriterium überprüft, was in Fig. 2 in schematisierter Form durch eine allgemeine Norm ∥·∥ angedeutet ist.

Erfüllt ein Redundanzparameterwert Rⱼ (bzw. Rₖ) das Auswahl-Kriterium (S70: "Y"), wird er und damit die durch ihn bestimmte Ausgangs-Pose P_{a, ij} (bzw. in der Abwandlung zusätzlich die Ausgangs-Pose(n) P_{e, ijk}) in einem Schritt S80 für die Ausgangs-Position X_{a, i} der Auswahl-Menge {{R}ᵢ} als mögliche Ausgangs-Pose hinzugefügt und mit Schritt S90 fortgefahren. Andernfalls (S70: "N") wird dieser Redundanzparameterwert Rⱼ bzw. die Ausgangspose Ausgangs-Pose P_{a, ij} verworfen und direkt mit Schritt S90 fortgefahren.

In Fig. 2 ist die Auswahl-Menge in fachüblicher Weise als Menge {{R}ᵢ} der Teilmengen {R}, der Redundanzparameterwerte R₍ⱼ₎ zu den einzelnen Ausgangs-Position X_{a, i} symbolisiert, um anzudeuten, dass bei Erfüllung des Auswahl-Kriteriums der entsprechende Redundanzparameterwert Rⱼ bzw. die durch ihn bestimmte Ausgangs-Pose P_{a, ij} der Teilmenge {R}ᵢ für die entsprechende Ausgangs-Position X_{a, i} hinzugefügt wird.

In Schritt S90 wird ein Abbruchkriterium geprüft, welches in Fig. 2 nur schematisiert dadurch angedeutet ist, dass überprüft wird, ob zu jeder Ausgangs-Position wenigstens eine mögliche Ausgangs-Pose ermittelt worden ist. Gleichermaßen kann hier beispielsweise auch das Erreichen eines bestimmten Abbruchkriterium-Wertes, beispielsweise das Erreichen eines vorgegebenen Mindestabstands zu Achsgrenzen, Hindernissen, singulären Posen und/oder Geschwindigkeits- und/oder Beschleunigungsgrenzen, geprüft oder der ganze vorgegebene Redundanzparameterwertebereich {Rⱼ} oder eine vorgebenene Mindest- und/oder Höchstanzahl Redundanzparameterwerten Rⱼ von überprüft werden.

Solange das Abbruchkriterium noch nicht erfüllt, beispielsweise zu der entsprechenden Ausgangs-Position noch keine mögliche Ausgangs-Pose ermittelt worden ist (in S90 entsprechend: "Y"), werden die Schritte S30 bis S90 jeweils mit dem nächsten der diskreten Redundanzparameterwerte Rⱼ wiederholt.

Ist das Abbruchkriterium erfüllt, weil beispielsweise zu der entsprechenden Ausgangs-position wenigstens eine mögliche Ausgangs-Pose ermittelt oder der ganze vorgegebene Redundanzparameterwertebereich überprüft worden ist (in S90 entsprechend: "N"), werden die Schritte S10 bis S90 für die nächste Ausgangs-Position X_{a, i+1} wiederholt, bis alle diskreten Ausgangs-Positionen durchgearbeitet wurden (S100: "Y").

Damit steht eine Auswahl-Menge von für die Aufgabe Xₐ₍ᵢ₎ -> Xₑ₍ᵢ₎ und die Ausgangs-Positionen X_{a, i} zum Ausführen dieser Aufgabe vorgegebenen möglichen Ausgangs-Posen P_{a, ij} zur Verfügung, die jeweils das Abbruchkriterium "∥·∥ > G₀" erfüllen, beispielsweise ausreichende Abstände zu Achsgrenzen, Hindernissen, singulären Posen und/oder Geschwindigkeits- und/oder Beschleunigungsgrenzen gewährleisten.

Hierzu ordnet die Auswahl-Menge jeder der diskreten Ausgangs-Positionen X_{a, i} die in Schritt S80 aufgefundenen Redundanzparameterwerte Rⱼ zu, wobei für Ausgangs-Positionen, die keiner dieser diskreten Ausgangs-Positionen X_{a, i} entsprechen, beispielsweise die Redundanzparameterwerte Rⱼ bzw. möglichen Ausgangs-Posen P_{a, ij} vorgegeben sind bzw. werden, die der nächstliegenden diskreten Ausgangs-Position X_{a, i} zugeordnet sind.

Im Betrieb werden zur Bahnplanung nun für die an einer Ausgangs-Position Xₐ durchzuführende Aufgabe jeweils in einem Schritt S110 online die hierfür vorgegebenen möglichen Ausgangs-Posen P_{a, ij} bzw. diese beschreibenden Redundanzparameterwerte Rⱼ aus der Auswahl-Menge abgefragt und hieraus beispielsweise jeweils möglichst diejenige verwendet bzw. angefahren, die den besten Wert des Abbruchkriteriums aufweist, das somit gleichermaßen als Gütekriterium fungiert.

In einer alternativen Ausführung kann in Schritt S110 auch der Roboter 10 und/oder (s)eine Umgebung konfiguriert, beispielsweise der Roboter zur Durchführung der Aufgabe an der Ausgangs-Position Xₐ stationär oder dynamisch so (um)platziert werden, dass er die bezüglich des Gütekriteriums möglichst beste(n) Ausgangs-Pose(n) P_{a, ij} aufweisen kann.

Obwohl in der vorhergehenden Beschreibung exemplarische Ausführungen erläutert wurden, sei darauf hingewiesen, dass eine Vielzahl von Abwandlungen möglich ist.

So wurde beispielsweise der Auswahl-Menge jeweils der entsprechende Redundanzpararmeter-Wert Rⱼ hinzugefügt, der die entsprechende Ausgangs-Pose P_{a, ij} des Roboters 10 für die jeweilige Ausgangs-Position X_{a, i} eindeutig bestimmt. Gleichermaßen können in einer Abwandlung beispielsweise auch alle Achswinkel des Roboters in der jeweiligen Ausgangs-Pose P_{a, ij}, eine Mischform aus Achswinkeln und (niedrigerdimensionalen) Redundanzparametern oder andere Darstellungen abgespeichert werden, beispielsweise Grenzen möglicher bzw. zulässiger Redundanzparameterwerte.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Roboter
- 11: Roboterbasis
- 20: Computer (System)

- A1 - A7: Roboterachse
- Gᵢⱼ: Abbruch-/Gütekriterium-Wert
- P_{a/e, ij}: Ausgangs-/End-Pose
- Rⱼ: diskreter (gesampelter) Redundanzparameterwert
- TCP: Tool Center Point
- Xₐ: Ausgangs-Position
- X_{a, i}: diskrete (gesampelte) Ausgangs-Position
- X_{e, i}: aufgabespezifische End-Position zu Ausgangs-Position X_{a, i}
- {·}: (Teil)Menge

## Patentansprüche

1. Verfahren zum Konfigurieren und/oder Steuern einer Roboteranordnung mit wenigstens einem Roboter (10), mit dem Schritt:
- Ermitteln (S110) wenigstens einer möglichen Soll-Pose des Roboters für wenigstens eine vorgegebene Ausgangs-Position (Xₐ) und Aufgabe des Roboters auf Basis einer, insbesondere vor einem Betrieb des Roboters ermittelten, Auswahl-Menge ({{R}ᵢ}) von für diese wenigstens eine Aufgabe und Ausgangs-Position (X_{a, i}) vorgegebenen möglichen Ausgangs-Posen (P_{a, ij});
wobei ein Vorgeben einer Auswahl-Menge ({{R}i}) von für wenigstens eine Aufgabe und Ausgangs-Position (X_{a, i}) vorgegebenen möglichen Ausgangs-Posen (P_{a, ij}) die Schritte aufweist:
- Ermitteln (S30) einer Start-Menge von Ausgangs-Posen (P_{a, ij}) des Roboters für die wenigstens eine Ausgangs-Position (X_{a, i}) des Roboters auf Basis eines vorgegebenen Redundanzparameterwertebereichs, wobei die Ausgangs-Posen (P_{a, ij}) Werte eines Redundanzparameters aufweisen, der dazu dient, die Mehrdeutigkeit von Achsstellungen zum Erreichen einer Position aufzulösen;
- Ermitteln (S50) wenigstens einer Zwischen- oder End-Pose des Roboters auf Basis der Aufgabe;
- Simulieren (S60) der Durchführung der Aufgabe durch den Roboter und Ermitteln eines, insbesondere benutzereingabenabhängig, vorgegebenen Auswahlkriteriums (Gᵢⱼ);
- Auswählen (S70) von wenigstens einer Ausgangs-Pose (P_{a, ij}) aus der Start-Menge auf Basis der wenigstens einen Aufgabe des Roboters und des Auswahlkriteriums (Gᵢⱼ); und
- Hinzufügen (S80) dieser Ausgangs-Pose als für diese Ausgangs-Position und Aufgabe vorgegebene mögliche Ausgangs-Pose zu der Auswahl-Menge.

2. Verfahren nach Anspruch 1, **gekennzeichnet durch** wenigstens einen der Schritte:
- Ermitteln (S110) einer Soll-Bahn des Roboters zu dieser wenigstens einen möglichen Soll-Pose; und/oder
- Konfigurieren (S110) der Roboteranordnung auf Basis dieser wenigstens einen möglichen Soll-Pose.

3. Verfahren nach einem der vorhergehenden Ansprüche, **dadurch gekennzeichnet, dass** die Auswahl-Menge für mehrere, insbesondere benutzereingabenabhängig, vorgegebene Ausgangs-Positionen (X_{a, i}) und/oder Aufgaben jeweils wenigstens eine mögliche Ausgangs-Pose (P_{a, ij}) des Roboters aufweist

4. Verfahren nach einem der vorhergehenden Ansprüche, **dadurch gekennzeichnet, dass** die wenigstens eine mögliche Soll-Pose während eines Betriebs des Roboters zum Durchführen der Aufgabe ermittelt wird.

5. Verfahren nach einem der vorhergehenden Ansprüche, **dadurch gekennzeichnet, dass** die Auswahl-Menge für wenigstens eine vorgegebene Ausgangs-Position und Aufgabe jeweils wenigstens eine mögliche End-Pose (P_{e, ij}) und/oder einen Wert eines, insbesondere benutzereingabenabhängig, vorgegebenen Gütekriteriums (Gᵢⱼ) aufweist und/oder vorgegebene mögliche Ausgangs-Posen der Auswahl-Menge entsprechend eines, insbesondere benutzereingabenabhängig, vorgegebenen Gütekriteriums (Gᵢⱼ) sortiert sind.

6. Verfahren nach einem der vorhergehenden Ansprüche, **dadurch gekennzeichnet, dass** das Auswahl- und/oder Gütekriterium (Gᵢⱼ), insbesondere benutzereingabenabhängig, von einem Abstand zu vorgegebenen Achsgrenzen, Hindernissen, vorgegebenen Geschwindigkeiten und/oder Zeitableitungen hiervon, insbesondere singulären, Posen, und/oder, insbesondere von dem Roboter aufbringbaren, Kräften abhängt.

7. Verfahren nach einem der vorhergehenden Ansprüche, **dadurch gekennzeichnet, dass** die wenigstens eine vorgegebene Ausgangs-Position der Auswahl-Menge roboterfest vorgegeben ist.

8. Verfahren nach einem der vorhergehenden Ansprüche, **gekennzeichnet durch** wenigstens einen der Schritte:
- Ermitteln (S10) mehrerer Ausgangs-Positionen des Roboters auf Basis einer, insbesondere benutzereingabenabhängig, vorgegebenen Diskretisierung;
- Ermitteln (S30) der Ausgangs-Posen der Start-Menge auf Basis eines benutzereingabenabhängig vorgegebenen Redundanzparameterwertebereichs und/oder einer, insbesondere benutzereingabenabhängig, vorgegebenen Diskretisierung;
- Ermitteln (S50) wenigstens einer Zwischen- oder End-Pose des Roboters auf Basis wenigstens einer vorgegeben Zwischen- oder End-Position des Roboters und/oder eines vorgegebenen Redundanzparameterwertebereichs und/oder einer, insbesondere benutzereingabenabhängig, vorgegebenen Diskretisierung;
und/oder
- Ordnen, insbesondere Sortieren, der Ausgangs-Posen auf Basis des Auswahlkriteriums und/oder ihrer Abfolge und/oder einer, insbesondere benutzereingabenabhängig, vorgegebenen Anzahl.

9. System (20) zum Konfigurieren und/oder Steuern einer Roboteranordnung mit wenigstens einem Roboter (10), das zur Durchführung eines Verfahrens nach einem der vorhergehenden Ansprüche eingerichtet ist.

10. Roboteranordnung mit wenigstens einem Roboter (10) und einem System (20) zum Konfigurieren und/oder Steuern der Roboteranordnung nach dem vorhergehenden Anspruch.

11. Computerprogrammprodukt mit einem Programmcode, der auf einem von einem Computer lesbaren Medium gespeichert ist, und der bei Ausführung des Programms durch eine Roboteranordnung nach Anspruch 10 diese veranlasst, das Verfahren nach einem der vorhergehenden Ansprüche 1 bis 8 auszuführen.

## Claims

1. A method of configuring and / or controlling a robot assembly, the robot assembly comprising at least one robot (10), the method comprising the step of:
- determining (S110) at least one possible target pose of the robot for at least one specified initial position (Xₐ) and at least one task of the robot on the basis of a selection set ({{R}ᵢ}) of possible initial poses (P_{a, ij}) which have been specified for said at least one task and said at least one initial position (X_{a, i}), in particular on the basis of a selection set ({{R}ᵢ}) of possible initial poses (P_{a, ij}), which selection set ({{R}ᵢ}) of possible initial poses (P_{a, ij}) has been determined before an operation of the robot, which possible initial poses (P_{a, ij}) have been specified for said at least one task and said at least one initial position (X_{a, i});
wherein specifying a selection set ({{R}i}) of possible initial poses (P_{a, ij}) which have been specified for at least one task and at least one initial position (X_{a, i}) comprises the steps of:
- determining (S30) a start set of initial poses (P_{a, ij}) of the robot for the at least one initial position (X_{a, i}) of the robot on the basis of a specified redundancy parameter value range, wherein the initial poses (P_{a, ij}) have values of a redundancy parameter which serves to resolve the ambiguity of axis positions to reach a position;
- determining (S50) at least one intermediate pose or final pose of the robot on the basis of the task;
- simulating (S60) the carrying out of the task by the robot and determining a specified selection criterion (Gᵢⱼ), in particular a selection criterion (Gᵢⱼ) which has been specified as a function of a user input;
- selecting (S70) at least one initial pose (P_{a, ij}) from the start set on the basis of the at least one task of the robot and the selection criterion (Gᵢⱼ); and
- adding (S80) this initial pose to the selection set as a possible initial pose specified for this initial position and for this task.

2. The method according to claim 1, **characterised by** at least one of the following steps:
- determining (S110) a target trajectory of the robot to said at least one possible target pose; and / or
- configuring (S110) the robot assembly on the basis of said at least one possible target pose.

3. The method according to any one of the preceding claims, **characterised in that**, for each of a plurality of specified initial positions (X_{a, i}) and / or specified tasks, in particular for each of a plurality of initial positions (X_{a, i}) and / or tasks that have been specified as a function of a user input, the selection set comprises at least one possible initial pose (P_{a, ij}) of the robot.

4. The method according to any one of the preceding claims, **characterised in that** the at least one possible target pose is determined during an operation of the robot for carrying out the task.

5. The method according to any one of the preceding claims, **characterised in that**, for each of at least one specified initial position and task, the selection set comprises at least one possible end pose (P_{e, ij}) and / or value of a specified quality criterion (Gᵢⱼ), in particular at least one possible end pose (P_{e, ij}) and / or value of a quality criterion (Gᵢⱼ) which has been specified as a function of a user input, and / or **characterised in that** specified possible initial poses of the selection set are sorted according to a specified quality criterion (Gᵢⱼ), in particular according to a quality criterion (Gᵢⱼ) that has been specified as a function of a user input.

6. The method according to any one of the preceding claims, **characterised in that** the selection criterion and / or the quality criterion (Gᵢⱼ) depends, in particular in a way that is dependent on a user input, on a distance from specified axis limits, obstacles, specified speeds and / or time derivatives thereof, poses, in particular singular poses, and / or forces, in particular forces which can be exerted by the robot.

7. The method according to any one of the preceding claims, **characterised in that** the at least one specified initial position of the selection set is specified in such a manner that it is fixed with respect to the robot.

8. The method according to any one of the preceding claims, **characterised by** at least one of the following steps:
- determining (S10) a plurality of initial positions of the robot on the basis of a specified discretisation, in particular on the basis of a discretisation which has been specified as a function of a user input;
- determining (S30) the initial poses of the start set on the basis of a redundancy parameter value range which has been specified as a function of a user input and / or on the basis of a specified discretisation, in particular on the basis of a discretisation which has been specified as a function of a user input;
- determining (S50) at least one intermediate pose or at least one end pose of the robot on the basis of at least one specified intermediate position or on the basis of at least one specified end position of the robot and / or on the basis of a specified redundancy parameter value range and / or on the basis of a specified discretisation, in particular a discretisation which has been specified as a function of a user input; and / or
- ordering, in particular sorting, the initial poses on the basis of the selection criterion and / or on the basis of their sequence and / or on the basis of a specified number, in particular on the basis of a number which has been specified as a function of a user input.

9. A system (20) for configuring and / or controlling a robot assembly, the robot assembly comprising at least one robot (10), wherein the system is set up to carry out a method according to any one of the preceding claims.

10. A robot assembly comprising at least one robot (10) and a system (20) for configuring and / or controlling the robot assembly according to the preceding claim.

11. A computer program product which comprises a program code which is stored on a computer-readable medium and which, when the program is being executed by a robot assembly according to claim 10, causes the robot assembly to carry out the method according to any one of the preceding claims 1 to 8.

## Revendications

1. Procédé de configuration et/ou de commande d'un ensemble de robots avec au moins un robot (10), avec l'étape :
- de détermination (S110) d'au moins une posture de consigne possible du robot pour au moins une position de départ (Xₐ) prédéfinie et de chargement du robot sur la base d'un ensemble de sélection ({{R}ᵢ}), déterminé en particulier avant un fonctionnement du robot, de postures de départ (P_{a, ij}) possibles prédéfinies pour ledit au moins un chargement et ladite au moins une position de départ (X_{a, i}) ;
dans lequel une prédéfinition d'un ensemble de sélection ({{R}ᵢ}) de postures de départ (P_{a, ij}) possibles prédéfinies pour au moins un chargement et une position de départ (X_{a, i}) présente les étapes :
- de détermination (S30) d'une quantité de départ de postures de départ (P_{a, ij}) du robot pour l'au moins une position de départ (X_{a, i}) du robot sur la base d'une plage de valeurs de paramètre de redondance prédéfinie, dans lequel les postures de départ (P_{a, ij}) présentent des valeurs d'un paramètre de redondance qui sert à résoudre l'ambiguïté de positions axiales pour atteindre une position ;
- de détermination (S50) d'au moins une posture intermédiaire ou finale du robot sur la base du chargement ;
- de simulation (S60) de la mise en oeuvre du chargement par le robot et de détermination d'un critère de sélection (Gᵢⱼ) prédéfini en particulier en fonction d'une entrée d'utilisateur ;
- de sélection (S70) d'au moins une posture de départ (P_{a, ij}) parmi l'ensemble de départ sur la base de l'au moins un chargement du robot et du critère de sélection (Gᵢⱼ) ; et
- d'ajout (S80) de ladite posture de départ en tant que posture de départ possible prédéfinie pour ladite position de départ et le chargement à l'ensemble de sélection.

2. Procédé selon la revendication 1, **caractérisé par** au moins une des étapes :
- de détermination (S110) d'une trajectoire de consigne du robot vers ladite au moins une posture de consigne possible ; et/ou
- de configuration (S110) de l'ensemble de robots sur la base de ladite au moins une posture de consigne possible.

3. Procédé selon l'une quelconque des revendications précédentes, **caractérisé en ce que** l'ensemble de sélection présente pour plusieurs positions de départ (X_{a, i}) et/ou chargements prédéfinis en particulier en fonction d'une entrée d'utilisateur, respectivement au moins une posture de départ (P_{a, ij}) possible du robot.

4. Procédé selon l'une quelconque des revendications précédentes, **caractérisé en ce que** l'au moins une posture de consigne possible est déterminée pendant un fonctionnement du robot pour mettre en oeuvre le chargement.

5. Procédé selon l'une quelconque des revendications précédentes, **caractérisé en ce que** l'ensemble de sélection présente pour une position de départ et/ou un chargement prédéfinis respectivement au moins une posture finale (P_{e, ij}) possible et/ou une valeur d'un critère de qualité (Gᵢⱼ) prédéfini en particulier en fonction d'une entrée d'utilisateur et/ou des postures de départ possibles prédéfinies de l'ensemble de sélection sont triées conformément à un critère de qualité (Gᵢⱼ) prédéfini en particulier en fonction d'une entrée d'utilisateur.

6. Procédé selon l'une quelconque des revendications précédentes, **caractérisé en ce que** le critère de sélection et/ou de qualité (Gᵢⱼ) dépend en particulier, en particulier en fonction d'une entrée d'utilisateur, d'un espacement par rapport à des limites axiales prédéfinies, des obstacles, des vitesses prédéfinies et/ou de leurs dérivées temporelles, en particulier de postures singulières et/ou de forces pouvant être appliquées en particulier par le robot.

7. Procédé selon l'une quelconque des revendications précédentes, **caractérisé en ce que** l'au moins une position de départ prédéfinie de l'ensemble de sélection est prédéfinie de manière solidaire du robot.

8. Procédé selon l'une quelconque des revendications précédentes, **caractérisé par** au moins une des étapes :
- de détermination (S10) de plusieurs positions de départ du robot sur la base d'une discrétisation prédéfinie en particulier en fonction d'une entrée d'utilisateur ;
- de détermination (S30) des postures de départ de l'ensemble de départ sur la base d'une plage de valeurs de paramètre de redondance prédéfinie en fonction d'une entrée d'utilisateur et/ou d'une discrétisation prédéfinie en particulier en fonction d'une entrée d'utilisateur ;
- de détermination (S50) d'au moins une posture intermédiaire ou finale du robot sur la base d'au moins une position intermédiaire ou finale prédéfinie du robot et/ou d'une plage de valeurs de paramètre de redondance prédéfinie et/ou d'une discrétisation prédéfinie en particulier en fonction d'une entrée d'utilisateur ;
et/ou
- de classement, en particulier de tri, des postures de départ sur la base du critère de sélection et/ou de leur succession et/ou d'un nombre prédéfini en particulier en fonction d'une entrée d'utilisateur.

9. Système (20) de configuration et/ou de commande d'un ensemble de robots avec au moins un robot (10), qui est mis au point pour mettre en oeuvre un procédé selon l'une quelconque des revendications précédentes.

10. Ensemble de robots avec au moins un robot (10) et un système (20) de configuration et/ou de commande de l'ensemble de robots selon la revendication précédente.

11. Produit de programme informatique avec un code de programme, qui est mémorisé sur un support lisible par un ordinateur, et qui amène, lors de l'exécution du programme par un ensemble de robots selon la revendication 10, celui-ci à exécuter le procédé selon l'une quelconque des revendications 1 à 8.
